# FASCICULE DE BREVET EUROPEEN

(11) **EP 2 953 029 B1**
(45) Date de publication et mention de la délivrance du brevet: **31.07.2019**
(21) Numéro de dépôt: 15169254.8
(22) Date de dépôt: 26.05.2015
(51) Int. Cl.: G06F 11/34

(54) **METHODES ET SYSTEMES DE TEST DE PERFORMANCES A DEBIT CONFIGURABLE**
LEISTUNGSTEST-METHODEN UND -SYSTEME MIT KONFIGURIERBAREM DURCHSATZ
PERFORMANCE TESTING METHODS AND SYSTEMS WITH CONFIGURABLE RATE

(30) Priorité: 03.06.2014 FR 1455026
(43) Date de publication de la demande: 09.12.2015
(73) Titulaire: Bull S.A.S., 78340 Les Clayes-sous-Bois (FR)
(72) Inventeur: Aiello, Damien, 38500 La Buisse (FR); Alvarez-Marcos, José-Ignacio, 69220 Saint Jean d'Ardieres (FR); Keribin, Valérie, 38100 Grenoble (FR)
(74) Mandataire: Novagraaf Technologies

(56) Documents cités:
- US-A1- 2011 225 569
- US-A1- 2013 282 354
- Litvin, Arik: "Load Runner Testing / Think Time Setting Considerations", , 11 mai 2004 (2004-05-11), XP002738527, Extrait de l'Internet: URL:http://www.sdn.sap.com/irj/scn/go/port al/prtroot/docs/library/uuid/f8e2c990-0201 -0010-2698-d1c7776a00b2?overridelayout=tru e [extrait le 2015-04-16]

## Description

L'invention concerne les outils de test de performances d'une infrastructure informatique.

On entend, ici, par infrastructure informatique tout système d'information mettant en oeuvre une ou plusieurs ressources matérielles, telles que des serveurs et/ou des bases de données, configurées pour mettre à la disposition de plusieurs utilisateurs au moins un service rendu par des ressources logicielles.

Après le développement ou toute modification dans cette infrastructure informatique, une étape de test de ses performances (« benchmark » en terminologie anglo-saxonne) est généralement nécessaire. Cette étape permet, notamment, de détecter les faiblesses de cette infrastructure, et par conséquent les corrections à lui apporter, ainsi que de quantifier les gains apportés par ces éventuelles corrections.

Il se trouve, à cet égard, différents outils (ou logiciels) de test de performances permettant de simuler divers scénarios d'utilisation de cette infrastructure informatique pour en déduire des données statistiques reflétant les performances de cette infrastructure cible. Parmi ces outils, on cite l'outil *JMeter*® ; un logiciel libre édité par la Fondation Apache® (http://*jmeter*.apache.org/).

L'outil *JMeter*® permet, en effet, d'effectuer des tests de performance d'applications et de serveurs selon différents protocoles (tels que HTTP/HTTPS, FTP, JDBC, JMS, LDAP, SOAP, SMTP, POP3, IMAP). Pour cela, *JMeter*® simule la charge d'une pluralité de clients connectés à un serveur cible et subséquemment mesure un certain nombre de métriques de performances décrivant le comportement du serveur en réponse à cette charge (temps de réponse ou taux d'erreurs par exemple).

Le test des performances d'une infrastructure informatique se déroule, généralement, dans le cadre d'une « campagne de tirs » effectuée depuis un terminal utilisateur, sur lequel est installé le logiciel *JMeter*® (ou plus généralement, tout autre moyen de test charge) pour injecter, selon un scénario de test de charge prédéfini, des requêtes à destination de l'infrastructure informatique cible.

Litvin, Arik: "Load Runner Testing / Think Time Setting Considerations",, 11 mai 2004 (2004-05-11), Extrait de l'Internet:URL:http://www.sdn.sap.com/irj/scn/go/portal/prtroot/docs/library/uuid/ f8e2c990-0201-0010-2698-d1c7776a00b2?overridelayout=true
décritdes critères à tenir en compte en choisissant le temps d'attente pour des tests de charge. En particulier, selon cet article, un scénario de test doit avoir une durée assez longue pour utiliser des temps d'attente aléatoires. Sinon, le temps d'attente moyenne (et alors le charge) ne correspondrait pas à celui qui était voulu.

Afin de réaliser des scénarios de test de charge qui représentent au mieux une utilisation réelle d'un certain système d'information à tester, plusieurs paramètres doivent être pris en considération tels que les pages consultées, le nombre d'utilisateurs simultanés, le temps entre chaque interaction utilisateur avec l'application, ou les ressources systèmes (CPU, mémoire, bande passante par exemple). Sinon, ces scénarios ne seront pas conformes à la réalité, et donc impertinents.

En particulier, dans la définition d'un scénario de test de charge, une attention particulière doit être portée aux paramètres suivants
- le temps de réflexion ou « think time » qui est utilisé pour simuler le temps entre deux interactions (ou requêtes) de l'utilisateur avec l'application cible (telle que la lecture d'une page ou le remplissage d'un formulaire). En d'autres termes, ce temps de réflexion est une durée de temps à attendre après chaque requête pour simuler le comportement d'un opérateur humain dans ses interactions avec l'application cible ; et
- le débit d'injection de charge du moyen de test de charge ou, autrement dit, la durée totale d'un scénario de test de charge qui détermine le débit d'injection dans une campagne de tirs.

Le temps de réflexion doit, de préférence, varier d'une requête à une autre du scénario, pour la simple raison que le temps de réflexion d'un être humain ne peut a priori être rigoureusement constant.

Il est, également, préférable que le débit d'injection de charge par le moyen de test de charge soit d'une valeur prédéfinie afin de pouvoir émuler certaines ressources du système et du réseau en utilisation.

Cependant, à ce jour, lors d'une campagne de tirs et afin de respecter un débit d'injection prédéfini, les temps de réflexion ne doivent pas varier d'une itération à une autre d'un scénario de test de charge. Par ailleurs, en optant pour un temps de réflexion variable, on ne peut respecter un débit prédéfini d'injection de charge.

En d'autres termes, aucune solution existante, en l'occurrence *JMeter*®*,* ne permet de faire varier les temps de réflexion tout en assurant qu'un débit prédéfini d'injection de charge soit respecté.

Un objet de la présente invention est de surmonter les limitations précitées des outils de test de charge.

Un autre objet de la présente invention est de proposer un outil de test de charge permettant d'exécuter des scénarios reproduisant au mieux possible une utilisation réelle du système d'information à tester.

Un autre objet de la présente invention est de proposer une nouvelle structure ou conception de scénario de test de charge.

Un autre objet de la présente invention est d'apporter des améliorations à l'outil de test de charge *JMeter*® développé par Apache® Software Fondation.

À ces fins, l'invention se rapporte, selon un premier aspect, à une méthode de test de performances d'une infrastructure informatique, cette méthode comprenant une première phase de définition d'un scénario de test de charge incluant une pluralité de requêtes, chaque requête étant suivie d'un temps d'attente, et une deuxième phase d'exécution dudit scénario de test de charge par un moyen de test de charge en injectant ladite pluralité de requêtes à destination de l'infrastructure informatique, la phase de définition dudit scénario de test de charge comprenant les étapes suivantes :
- détermination de la durée totale du scénario de test de charge de sorte que le débit d'injection de charge soit égal à un débit d'injection de charge prédéfini ;
- définition d'un intervalle de variation pour chaque temps d'attente de sorte que la somme des bornes supérieures desdits intervalles de variation soit égale à la durée totale du scénario de test de charge ;
- choix d'une valeur pour chaque temps d'attente, cette valeur étant choisie aléatoirement dans l'intervalle de variation correspondant ;
- calcul de la somme des valeurs choisies pour lesdits temps d'attente ;
- insertion d'une temporisation finale d'attente dans le scénario de test de charge de sorte que la somme des valeurs desdits temps d'attente et ladite temporisation finale soit égale à la durée totale du scénario de test de charge.

La méthode présente, selon diverses réalisations, les caractères suivants, le cas échéant combinés :
- la définition d'un intervalle de variation pour un temps d'attente comprend la décomposition dudit temps d'attente en une durée d'attente fixe et une durée d'attente aléatoire de sorte que la borne supérieure dudit intervalle soit égale à la somme de la valeur de la durée d'attente fixe et de la valeur maximale possible de la durée d'attente aléatoire ;
- la durée d'attente aléatoire est une variable aléatoire centrée sur la valeur de la durée d'attente fixe ;
- la valeur de la durée d'attente fixe est commune aux temps d'attente ;
- la durée d'attente aléatoire suit une loi de probabilité propre à chaque temps d'attente.

Avantageusement, la méthode précédente comprend, en outre, une réitération de la phase de définition dudit scénario de test de charge. La durée totale du scénario de test de charge est maintenue constante d'une itération à une autre dudit scénario de test de charge.

L'invention se rapporte, selon un deuxième aspect, à un système de test de performances d'une infrastructure informatique, ce système comprenant
- un scénario de test de charge incluant une pluralité de requêtes, chaque requête étant suivie d'un temps d'attente ; et
- un moyen de test de charge configuré pour exécuter ledit scénario de test de charge en injectant ladite pluralité de requêtes à destination de l'infrastructure informatique,
ce système comprenant, en outre,
- des moyens pour déterminer la durée totale du scénario de test de charge de sorte que le débit d'injection de charge soit égal à un débit d'injection de charge prédéfini ;
- des moyens pour définir un intervalle de variation pour chaque temps d'attente de sorte que la somme des bornes supérieures desdits intervalles de variation soit égale à la durée totale du scénario de test de charge ;
- des moyens pour choisir une valeur pour chaque temps d'attente, cette valeur étant choisie aléatoirement dans l'intervalle de variation correspondant ;
- des moyens pour calculer la somme des valeurs choisies pour lesdits temps d'attente ;
- des moyens pour insérer une temporisation finale d'attente dans le scénario de test de charge de sorte que la somme des valeurs desdits temps d'attente et ladite temporisation finale soit égale à la durée totale du scénario de test de charge.

L'invention se rapporte, selon un troisième aspect, à un produit programme d'ordinateur implémenté sur un support mémoire, susceptible d'être mis en oeuvre au sein d'une unité de traitement informatique et comprenant des instructions pour la mise en oeuvre de la méthode résumée ci-dessus.

D'autres objets et avantages de l'invention apparaîtront à la lumière de la description de modes de réalisation, faite ci-après en référence aux dessins annexés dans lesquels :
- la figure 1 illustre un contexte général de mise en oeuvre de modes de réalisation ;
- la figure 2 illustre un scénario de test de charge selon un mode de réalisation.

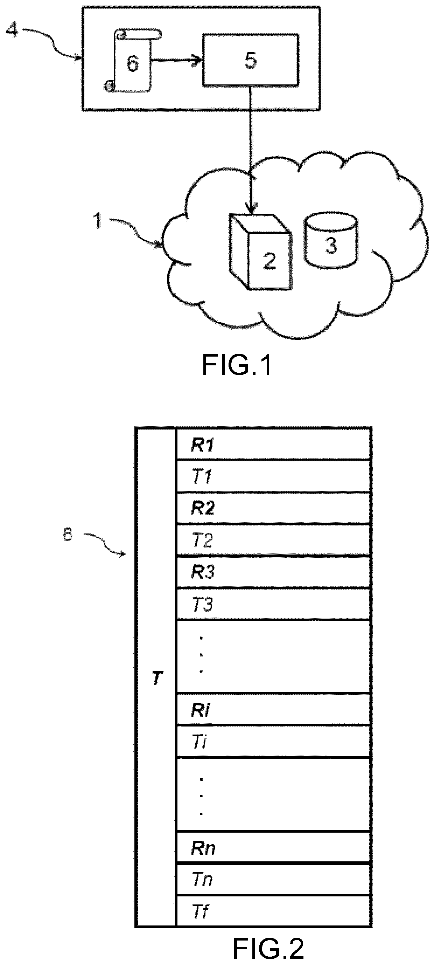

Sur la figure 1 est affichée une infrastructure informatique **1** comprenant des ressources matérielles et/ou logicielles dont les performances sont à tester. L'infrastructure informatique **1** comprend, par exemple, un ou plusieurs serveurs **2** et/ou bases de données **3** interconnectés et mettant en oeuvre des applications informatiques telles qu'une application Web, une application de messagerie électronique, ou une plate-forme de calcul.

Un moyen **5** de test de charge, installé dans un équipement utilisateur **4,** est configuré pour exécuter un scénario **6** de test de charge.

Le moyen **5** de test de charge est l'outil *JMeter*®, toute version ultérieure de celui-ci ou, plus généralement, tout moyen de test de charge de type *JMeter*®.

L'équipement utilisateur **4** est un terminal utilisateur tel qu'un ordinateur ou, plus généralement, tout équipement utilisateur pouvant être connecté à l'infrastructure informatique **1** cible.

Le scénario **6** de test de charge comprend un enchaînement d'actions (ou de requêtes) à exécuter par le moyen **5** de test de charge. Ce moyen **5** de test de charge est configuré pour stresser, suivant le scénario **6** de test de charge, l'infrastructure informatique **1** cible via une injection de charge à destination de cette infrastructure. Dans un mode de réalisation, le scénario **6** de test de charge représente un scénario majeur d'utilisation de l'infrastructure informatique **1** (c'est-à-dire, la suite d'écrans et des fonctions les plus utilisées de l'application informatique supportée par cette infrastructure informatique **1**).

Il s'ensuit que, en réitérant l'exécution du scénario **6** de test de charge dans le carde d'une campagne de tirs, le moyen **5** de test de charge injecte du trafic (c.à.d. de la charge) vers les éléments (matériels et/ou logiciels) de l'infrastructure informatique **1,** et mesure en conséquence des données de performances de cette infrastructure informatique **1** cible.

En se référant maintenant à la figure 2, le scénario **6** de test de charge comprend
- une liste de requêtes **R1, R2, ..., Ri, ...Rn** à exécuter par le moyen **5** de test de charge. Une requête **Ri** consiste, par exemple, à émettre une requête HTTP vers un serveur Web ;
- après chaque requête **Ri,** un temps de réflexion ***Ti*** variable dans un intervalle de variation prédéfini ; et
- une temporisation finale ***Tf.***

Dans un mode de réalisation, le temps de réflexion ***Ti*** variable est donné par **Ti= T₀ + dt** où
- ***T₀** est* une durée constante, dite temps de réflexion de base, qui correspond à une durée d'attente fixe ; et
- ***dt*** est une durée d'attente variable qui correspond à une durée d'attente aléatoire de moyenne et de variance prédéfinies.

La durée d'attente aléatoire ***dt*** est choisie de sorte que la valeur maximale qu'elle peut prendre plus la durée d'attente fixe **T₀** soit égale à la borne supérieure de l'intervalle de variation du temps de réflexion **Ti.**

Dans un mode de réalisation, la durée d'attente aléatoire *dt* du temps de réflexion **Ti** est de moyenne nulle et de variance ***v*.** Autrement dit, le temps de réflexion **Ti** est une variable aléatoire de moyenne **T₀** et de variance ***v*.** Les temps de réflexion **Ti** sont donc des durées d'attente aléatoire dispersées autour de la moyenne **T₀.**

Dans un autre mode de réalisation, la durée d'attente aléatoire ***dt*** du temps de réflexion **Ti** est aléatoire dans un intervalle centré sur **T₀.** En outre, la largeur de cet intervalle de variation est définie en termes de pourcentage de **T₀,** comme par exemple [0.75***T₀**, 1.25 **T₀**], ou [0.90***T₀**, 1.1***T₀**]. Dans ces deux cas particuliers, le temps de réflexion peut prendre comme valeur maximale, respectivement, 1.25***T₀** et 1.1***T₀**.

D'une itération à une autre du scénario **6** de test de charge, les temps de réflexion **Ti** dévient aléatoirement de leur valeur moyenne **T₀**, c'est-à-dire du temps de réflexion de base **T₀** pré-configurée, de plus ou moins ***X** pour cent (**X**%),* la valeur de ***X*** étant paramétrable.

Dans un mode de réalisation, la durée d'attente aléatoire *dt* suit la même loi de probabilité pour tous les temps de réflexion **T1, T2, ..., Ti, ..., Tn.**

En variante, la durée variable ***dt*** du temps de réflexion **Ti** suit une loi de probabilité propre à chaque requête **Ri** à laquelle correspond le temps de réflexion **Ti.** Avantageusement, ce mode de réalisation permet de tenir compte de la diversité du temps de réflexion en fonction de la requête injectée vers l'infrastructure informatique cible.

Le scénario **6** de test de charge est de durée totale **T.**

Afin de respecter un débit d'injection prédéfini, la durée totale **T,** qui correspond à ce débit, d'un scénario **6** de test de charge est maintenue constante d'une itération à une autre de ce scénario **6,** tout en maintenant l'aspect aléatoire des temps de réflexion.

Pour cela,
- on détermine la durée totale **T** du scénario **6** de test de charge permettant d'avoir un débit souhaité d'injection de charge par scénario ;
- on définit un intervalle de variation pour chaque temps de réflexion **Ti** de sorte que la somme des bornes supérieures de ces intervalles de variation soit égale à la durée totale **T** du scénario **6** de test de charge. Dans un mode de réalisation, on décompose le temps de réflexion **Ti en**
   o une composante ou une durée d'attente constante **T₀** commune ou propre à chaque temps de réflexion **Ti** ; et
   o une durée d'attente aléatoire ***dt*** de sorte que la borne supérieure de l'intervalle de variation du temps de réflexion **Ti** soit égale à la somme de la composante fixe **T₀** et la valeur maximale qu'elle peut prendre la durée variable ***dt.*** On fixe, ainsi, la valeur maximale qu'elle peut prendre chaque temps de réflexion **Ti** de sorte que la somme des valeurs maximales possibles des temps de réflexion **Ti** donne la durée totale **T** du scénario **6** de test de charge. Autrement dit, la durée totale **T** est la somme des valeurs maximales que les temps de réflexion **Ti** peuvent prendre ;
- on choisit une valeur pour chaque temps de réflexion **Ti** tirée aléatoirement dans son intervalle de variation prédéfini ;
- on calcule la somme effective des temps de réflexion **Ti,** c'est-à-dire la somme des valeurs des temps de réflexion **Ti** choisies aléatoirement dans leur intervalle de variation respectifs ;
- on définit une temporisation finale qui est égale à la différence entre la durée totale **T** du scénario **6** de test de charge, correspondante au débit d'injection prédéfini, et la somme effective des temps de réflexion **Ti.**

Le temps de réflexion **Ti** varie aléatoirement dans la fourchette prédéfinie autour de **T₀**, lors de chaque itération du scénario **6** de test de charge.

La temporisation finale **Tf,** en fin de scénario **6** de test de charge, représente un temps d'attente variable en fonction de la somme des temps de réflexions **Ti** réels. Cette temporisation finale **Tf** permet de compléter la somme des temps de réflexion **Ti** tirés aléatoirement dans leurs intervalles de variation respectifs pour atteindre la durée totale **T** souhaitée du scénario **6.** Avoir une durée totale **T** constante du scénario **6** de test de charge permet, avantageusement, de conserver un débit constant de scénarios par unité de temps (scénarios par heure), ou autrement dit un débit d'injection constant.

Il s'ensuit que la temporisation finale (en fonction des variations aléatoires des temps de réflexion **Ti**) est déterminée d'une manière dynamique de sorte à avoir une durée totale **T** constante d'une itération à une autre du scénario **6** de test de charge. Ceci a pour effet de respecter un débit prédéfini d'injection de charge à destination de l'infrastructure informatique cible.

À titre d'exemple, dans un mode de réalisation illustratif de cinq requêtes **R1-R5** et un scénario **6** de test de charge de durée totale souhaité **T,**
- on choisit une durée d'attente fixe **T₀** du temps de réflexion égale à **T1** divisée par six (**T₀**=**T1**/6). Cette durée d'attente fixe **T₀** est commune à tous les temps de réflexion **T1-T5** ;
- la durée variable ***dt*** des cinq temps de réflexion **T1-T5** est choisie aléatoirement, respectivement, dans les intervalles [0.75***T₀**, 1.25***T₀**], [0.9***T₀**, 1.1***T₀**], [0.75***T₀**, 1.25***T₀**], [0.9***T₀**, 1.1***T₀**], [0.7***T₀**, 1.3***T₀**]. Il en résulte que la somme des valeurs maximales que peut prendre chaque temps de réflexion **T1-T5** est égale à la durée totale T du scénario de test de charge (1.25***T₀**+1.1***T₀** +1.25***T₀** +1.1***T₀** +1.3***T₀** = 6**T₀** =**T**) ;
- on choisit des temps réflexion **T1-T5** tirés d'une manière aléatoire, respectivement, dans [0.75***T₀**, 1.25***T₀**], [0.9***T₀**, 1.1***T₀**], [0.75***T₀**, 1.25***T₀**], [0.9***T₀**, 1.1***T₀**], et [0.7***T₀**, 1.3***T₀**] ;
- on calcule la temporisation finale **Tf** nécessaire pour que la somme des temps de réflexion **T1-T5** effectifs (c.à.d. la somme des valeurs choisies pour les temps de réflexion **T1-T5**) et de **Tf** soit égale à la durée totale **T** souhaitée du scénario de test de charge.

Il est à noter que la temporisation finale **Tf** peut être insérée à tout endroit du scénario **6** de test de charge, notamment au début du scénario. En variante, cette temporisation finale peut être subdivisée en deux ou en plusieurs temporisations à insérer à des endroits différents du scénario **6** de test de charge (par exemple, **Tf**/2 au début du scénario et **Tf**/2 à la fin de celui-ci).

Un scénario de test de charge de requêtes peut, donc, être défini par
- une durée totale **T** de scénario, ou d'une manière équivalente un débit d'injection ou encore un nombre de scénarios par unité de temps ;
- des intervalles de variation des temps de réflexion **Ti,** ou alternativement, d'un temps de réflexion de base **T₀** et un intervalle de variation de la composante variable *δ**t*** par temps de réflexion **Ti.**

Il est à noter que le débit d'injection est lié à la durée totale **T** du scénario **6** de test de charge ; le débit étant le quotient de la taille de la charge (ou du trafic) injectée par un scénario de test de charge par la durée totale **T** de ce scénario de test de charge.

Le moyen **5** de test de charge se charge d'injecter les requêtes **Ri,** selon le scénario **6** de test de charge, vers l'infrastructure informatique **1.** L'infrastructure informatique **1** exécute ces requêtes ce qui permet au moyen **5** de test de charge de mesurer les performances de cette infrastructure informatique **1** cible.

Avantageusement, les modes de réalisation décrits ci-dessus permettent de faire varier les temps de réflexion (ou les « thinktimes ») au cours d'une itération d'un scénario **6** tout en assurant qu'un débit prédéfini d'injection soit respecté.

Avantageusement, les temps de réflexion **Ti** sont différents
- d'une requête à une autre d'un même scénario **6** de test de charge de sorte à mieux représenter la diversité des requêtes possibles et les temps de réflexion qu'elles requièrent ; ainsi que
- d'une itération à une autre du scénario **6** de test de charge d'une même requête **Ri** de sorte à mieux représenter la diversité des comportements des opérateurs humains par rapport à une même requête.

Par conséquent, un *JMeter*® avec un temps de réflexion **Ti** variable tout en respectant un débit d'injection de charge prédéfini reflète la diversité des temps de réflexion dans les étapes d'une de tirs et respecte les contraintes des ressources réseaux et systèmes (un débit paramétrable prédéfini).

Il s'ensuit que des campagnes de tirs, en réitérant le scénario **6** de test de charge, permettent d'avoir des conclusions pertinentes sur les performances de l'infrastructure informatique **1** cible.

## Revendications

1. Méthode de test de performances d'une infrastructure informatique (1), cette méthode comprenant une première phase de définition d'un scénario (6) de test de charge incluant une pluralité de requêtes (R1-Rn), chaque requête (Ri) étant suivie d'un temps d'attente (Ti), et une deuxième phase d'exécution dudit scénario (6) de test de charge par un moyen (5) de test de charge en injectant ladite pluralité de requêtes à destination de l'infrastructure informatique (1), la phase de définition dudit scénario (6) de test de charge comprenant les étapes suivantes :
- détermination de la durée totale (T) du scénario (6) de test de charge de sorte que le débit d'injection de charge soit égal à un débit d'injection de charge prédéfini ;
- définition d'un intervalle de variation pour chaque temps d'attente (Ti) de sorte que la somme des bornes supérieures desdits intervalles de variation soit égale à la durée totale (T) du scénario (6) de test de charge ;
- choix d'une valeur pour chaque temps d'attente (Ti), cette valeur étant choisie aléatoirement dans l'intervalle de variation correspondant ;
- calcul de la somme des valeurs choisies pour lesdits temps d'attente;
- insertion d'une temporisation finale (Tf) d'attente dans le scénario (6) de test de charge de sorte que la somme des valeurs desdits temps d'attente et ladite temporisation finale (Tf) soit égale à la durée totale du scénario (6) de test de charge (T).

2. Méthode selon la revendication précédente, dans laquelle la définition d'un intervalle de variation pour un temps d'attente (Ti) comprend la décomposition dudit temps d'attente (Ti) en une durée d'attente fixe et une durée d'attente aléatoire de sorte que la borne supérieure dudit intervalle soit égale à la somme de la valeur de la durée d'attente fixe et de la valeur maximale possible de la durée d'attente aléatoire.

3. Méthode selon la revendication précédente, dans laquelle la durée d'attente aléatoire est une variable aléatoire centrée sur la valeur de la durée d'attente fixe.

4. Méthode selon les revendications 2 ou 3, dans laquelle la valeur de la durée d'attente fixe est commune aux temps d'attente (Ti).

5. Méthode selon l'une des revendications 2 à 4, dans laquelle la durée d'attente aléatoire suit une loi de probabilité propre à chaque temps d'attente (Ti).

6. Méthode selon l'une quelconque des revendications précédentes, comprenant, en outre, une réitération de la phase de définition dudit scénario (6) de test de charge.

7. Méthode selon la revendication précédente, dans laquelle la durée totale (T) du scénario de test de charge est maintenue constante d'une itération à une autre dudit scénario (6) de test de charge.

8. Système de test de performances d'une infrastructure informatique (1), ce système comprenant
- un scénario (6) de test de charge incluant une pluralité de requêtes (R1-Rn), chaque requête (Ri) étant suivie d'un temps d'attente (Ti) ; et
- un moyen (5) de test de charge configuré pour exécuter ledit scénario (6) de test de charge en injectant ladite pluralité de requêtes à destination de l'infrastructure informatique (1),
ce système comprenant, en outre, :
- des moyens pour déterminer la durée totale (T) du scénario de test de charge de sorte que le débit d'injection de charge soit égal à un débit d'injection de charge prédéfini ;
- des moyens pour définir un intervalle de variation pour chaque temps d'attente (Ti) de sorte que la somme des bornes supérieures desdits intervalles de variation soit égale à la durée totale (T) du scénario de test de charge ;
- des moyens pour choisir une valeur pour chaque temps d'attente (Ti), cette valeur étant choisie aléatoirement dans l'intervalle de variation correspondant ;
- des moyens pour calculer la somme des valeurs choisies pour lesdits temps d'attente;
- des moyens pour insérer une temporisation finale (Tf) d'attente dans le scénario (6) de test de charge de sorte que la somme des valeurs desdits temps d'attente et ladite temporisation finale (Tf) soit égale à la durée totale du scénario (6) de test de charge (T).

9. Produit programme d'ordinateur implémenté sur un support mémoire, susceptible d'être mis en oeuvre au sein d'une unité de traitement informatique et comprenant des instructions pour la mise en oeuvre d'une méthode selon l'une des revendications 1 à 7.

## Patentansprüche

1. Leistungstestmethode für eine Rechnerinfrastruktur (1), wobei diese Methode eine erste Phase des Definierens eines Lasttestszenarios (6) umfasst, die eine Vielzahl von Abfragen (R1-Rn) beinhaltet, wobei auf jede Abfrage (Ri) eine Wartezeit (Ti) folgt, und eine zweite Phase des Abarbeitens des Lasttestszenarios (6) durch ein Lasttestmittel (5), indem die Vielzahl von Abfragen an die Rechnerinfrastruktur (1) gerichtet injiziert wird, wobei die Phase des Definierens des Lasttestszenarios (6) die folgenden Schritte umfasst:
- Bestimmen der Gesamtdauer (T) des Lasttestszenarios (6), so dass der Lastinjektionsdurchsatz gleich einem vorgegebenen Lastinjektionsdurchsatz ist;
- Definieren eines Änderungsintervalls für jede Wartezeit (Ti), so dass die Summe der oberen Grenzwerte der Änderungsintervalle gleich der Gesamtdauer (T) des Lasttestszenarios (6) ist;
- Auswählen eines Werts für jede Wartezeit (Ti), wobei dieser Wert zufällig in dem entsprechenden Änderungsintervall ausgewählt wird;
- Berechnen der Summe der für die Wartezeiten ausgewählten Werte;
- Einfügen einer finalen Warteverzögerung (Tf) in das Lasttestszenario (6), so dass die Summe aus den Werten der Wartezeiten und der finalen Verzögerung (Tf) gleich der Gesamtdauer (T) des Lasttestszenarios (6) ist.

2. Methode nach dem vorhergehenden Anspruch, bei der die Definition eines Änderungsintervalls für eine Wartezeit (Ti) das Zerlegen der Wartezeit (Ti) in eine feste Wartedauer und eine zufällige Wartedauer umfasst, so dass der obere Grenzwert des Intervalls gleich der Summe aus dem Wert der festen Wartedauer und dem größtmöglichen Wert der zufälligen Wartedauer ist.

3. Methode nach dem vorhergehenden Anspruch, bei der die zufällige Wartedauer ein zufälliger Wert ist, der auf den Wert der festen Wartedauer zentriert ist.

4. Methode nach den Ansprüchen 2 oder 3, bei welcher der Wert der festen Wartedauer den Wartezeiten (Ti) gemein ist.

5. Methode nach einem der Ansprüche 2 bis 4, bei welcher die zufällige Wartedauer einem jeder Wartezeit (Ti) eigenen Wahrscheinlichkeitsgesetz folgt.

6. Methode nach einem der vorhergehenden Ansprüche, die ferner eine Reiteration der Definitionsphase des Lasttestszenarios (6) umfasst.

7. Methode nach dem vorhergehenden Anspruch, bei der die Gesamtdauer (T) des Lasttestszenarios von einer Iteration zu einer anderen des Lasttestszenarios (6) konstant gehalten wird.

8. Leistungstestsystem für eine Rechnerinfrastruktur (1), wobei dieses System umfasst:
- ein Lasttestszenario (6), das eine Vielzahl von Abfragen (R1-Rn) beinhaltet, wobei auf jede Abfrage (Ri) eine Wartezeit (Ti) folgt, und
- ein Lasttestmittel (5), das dazu konfiguriert ist, das Lasttestszenario (6) abzuarbeiten, indem es die Vielzahl von Abfragen an die Rechnerinfrastruktur (1) gerichtet injiziert,
wobei dieses System ferner umfasst:
- Mittel zum Bestimmen der Gesamtdauer (T) des Lasttestszenarios, so dass der Lastinjektionsdurchsatz gleich einem vorgegebenen Lastinjektionsdurchsatz ist;
- Mittel zum Definieren eines Änderungsintervalls für jede Wartezeit (Ti), so dass die Summe der oberen Grenzwerte der Änderungsintervalle gleich der Gesamtdauer (T) des Lasttestszenarios ist;
- Mittel zum Auswählen eines Werts für jede Wartezeit (Ti), wobei dieser Wert zufällig in dem entsprechenden Änderungsintervall ausgewählt wird;
- Mittel zum Berechnen der Summe der für die Wartezeiten ausgewählten Werte;
- Mittel zum Einfügen einer finalen Verzögerung (Tf) in das Lasttestszenario (6), so dass die Summe aus den Werten der Wartezeiten und der finalen Verzögerung (Tf) gleich der Gesamtdauer (T) des Lasttestszenarios (6) ist.

9. Computerprogrammprodukt, das auf einem Speichermedium implementiert ist, geeignet ist, in einer Datenverarbeitungseinheit eingesetzt zu werden, und Anweisungen zur Umsetzung einer Methode nach einem der Ansprüche 1 bis 7 umfasst.

## Claims

1. Method of testing performance of a computerized infrastructure (1), this method comprising a first phase of defining a load testing scenario (6) including a plurality of requests (R1-Rn), each request (Ri) being followed by a waiting time (Ti), and a second phase of executing the said load testing scenario (6) by a load testing means (5) by injecting the said plurality of requests destined for the computerized infrastructure (1), the phase of defining the said load testing scenario (6) comprising the following steps:
- determination of the total duration (T) of the load testing scenario (6) so that the load injection rate is equal to a predefined load injection rate;
- definition of an interval of variation for each waiting time (Ti) so that the sum of the upper bounds of the said intervals of variation is equal to the total duration (T) of the load testing scenario (6);
- choice of a value for each waiting time (Ti), this value being chosen randomly in the corresponding interval of variation;
- calculation of the sum of the values chosen for the said waiting times;
- insertion of a final timeout (Tf) of waiting in the load testing scenario (6) so that the sum of the values of the said waiting times and the said final timeout (Tf) is equal to the total duration of the load testing scenario (6) (T).

2. Method according to the preceding claim, in which the definition of an interval of variation for a waiting time (Ti) comprises the decomposition of the said waiting time (Ti) into a fixed waiting duration and a random waiting duration so that the upper bound of the said interval is equal to the sum of the value of the fixed waiting duration and of the maximum possible value of the random waiting duration.

3. Method according to the preceding claim, in which the random waiting duration is a random variable centred on the value of the fixed waiting duration.

4. Method according to Claims 2 or 3, in which the value of the fixed waiting duration is common to the waiting times (Ti).

5. Method according to one of Claims 2 to 4, in which the random waiting duration follows a probability law specific to each waiting time (Ti).

6. Method according to any one of the preceding claims, comprising, furthermore, a repetition of the phase of defining the said load testing scenario (6).

7. Method according to the preceding claim, in which the total duration (T) of the load testing scenario is held constant from one iteration to another of the said load testing scenario (6).

8. System for testing performance of a computerized infrastructure (1), this system comprising
- a load testing scenario (6) including a plurality of requests (R1-Rn), each request (Ri) being followed by a waiting time (Ti); and
- a load testing means (5) configured to execute the said load testing scenario (6) by injecting the said plurality of requests destined for the computerized infrastructure (1),
this system comprising, furthermore:
- means for determining the total duration (T) of the load testing scenario so that the load injection rate is equal to a predefined load injection rate;
- means for defining an interval of variation for each waiting time (Ti) so that the sum of the upper bounds of the said intervals of variation is equal to the total duration (T) of the load testing scenario;
- means for choosing a value for each waiting time (Ti), this value being chosen randomly in the corresponding interval of variation;
- means for calculating the sum of the values chosen for the said waiting times;
- means for inserting a final timeout (Tf) of waiting into the load testing scenario (6) so that the sum of the values of the said waiting times and the said final timeout (Tf) is equal to the total duration of the load testing scenario (6) (T).

9. Computer program product run on a memory medium, able to be implemented within a computerized processing unit and comprising instructions for the implementation of a method according to one of Claims 1 to 7.
